# EUROPÄISCHE PATENTSCHRIFT

(11) **EP 0 885 056 B1**
(45) Veröffentlichungstag und Bekanntmachung des Hinweises auf die Patenterteilung: **05.11.2003**
(21) Anmeldenummer: 97913068.9
(22) Anmeldetag: 26.11.1997
(51) Int. Cl.: B01D 63/06

(54) **SYSTEM FÜR DIE MEMBRANFILTRATION IM QUERSTROMVERFAHREN**
CROSS-FLOW MEMBRANE FILTRATION SYSTEM
SYSTEME POUR LA FILTRATION MEMBRANAIRE A COURANT TRANSVERSAL

(30) Priorität: 05.12.1996 CH 298196
(43) Veröffentlichungstag der Anmeldung: 23.12.1998
(73) Patentinhaber: Bucher-Guyer AG, 8166 Niederweningen (CH)
(72) Erfinder: ROSA, Giuliano, CH-5430 Wettingen (CH)
(86) Internationale Anmeldenummer: CH9700443
(87) Internationale Veröffentlichungsnummer: WO98024538

(56) Entgegenhaltungen:
- EP-A- 0 039 583
- EP-A- 0 065 070
- WO-A-96/41676
- DE-U- 7 505 931
- GB-A- 1 465 971
- US-A- 3 446 359

## Beschreibung

Die Erfindung betrifft ein System für die Membranfiltration im Querstromverfahren mit einer Anzahl von Membranmodulen, wobei die Membranmodule hintereinander liegend in Serien (Passen) für den Durchlauf des Retentates miteinander verbunden sind und die Serien an Sammelleitungen zur Zuund Abführung des Retentates parallel angeschlossen sind.

Derartige Membranmodule sind als Bauelemente von Querstrom-Filtrationsanlagen bekannt. Die Querstromfiltration ist eine Druckfiltration. Dabei fliesst das zu filtrierende Produkt mit einer vorgegebenen Geschwindigkeit quer zur Durchgangsrichtung und längs der Oberfläche des Filters oder der Filtrations-Membrane. Die Querströmung verhindert weitgehend Ablagerungen von Feststoffen auf den Oberflächen der Filter, sie ermöglicht dadurch eine lang andauernde Betriebszeit ohne Verstopfung der Filter.

Solche Membranmodule sind häufig als sogenannte Rohr- oder Kapillarmodule ausgeführt, in denen eines oder mehrere Kapillarröhrchen oder Rohre in eine bündelförmige Einheit zusammengefasst sind. Die Trennmembrane ist dabei je nach Bauart auf der Innenwand oder Aussenwand der Rohre aufgebracht. Bei einer Ausführungsart sind in einem Modul 19 Membranröhrchen mit 1,27 cm (1/2 Zoll) Innendurchmesser zu einem Bündel zusammengefasst. Diese 19 Röhrchen werden gleichzeitig und parallel von einem Retentat mit vorgegebenem Druck durchströmt. Nach Durchgang durch die Filtermembranen fliesst das Permeat über zwei Anschlüsse an jedem Membranmodul ab.

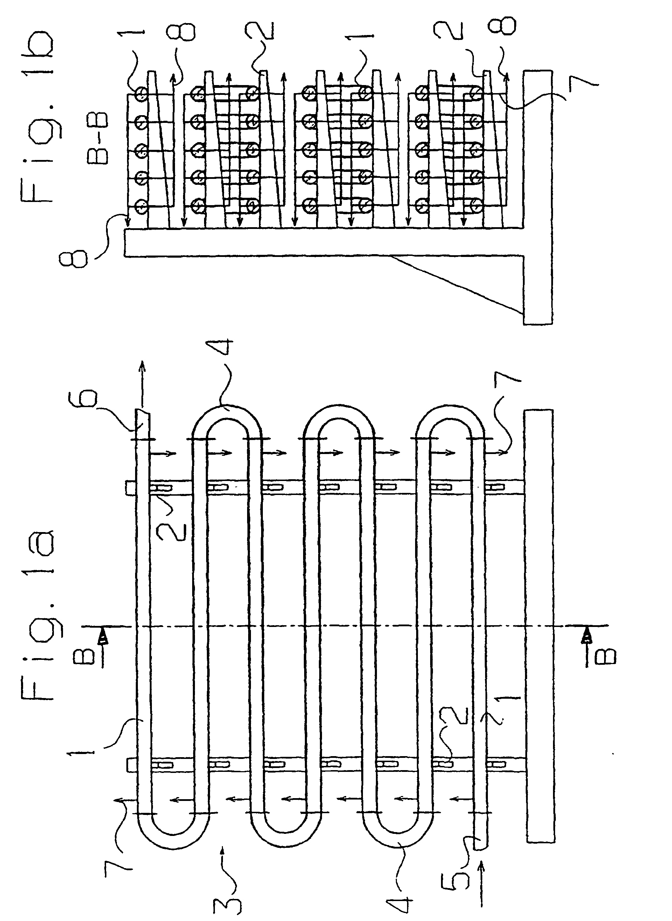

Ein bekanntes System für die Membranfiltration mit einer Anzahl derartiger Membranmodule 1 zeigen Fig. 1a in Seitenansicht und Fig. 1b in einem Teilschnitt B-B gemäss Fig. 1a. Dabei sind die Membranmodule 1 hintereinander liegend in fünf Serien 3 (Passen) auf Trägern 2 angeordnet. In jedem Pass 3 sind sieben Membranmodule 1 in einer vertikalen Ebene übereinander liegend durch U-Bögen 4 in einer Serie verbunden. Das zu filtrierende Medium wird als Retentat an einem Anschluss 5 in das unterste Membranmodul 1 jedes Passes 3 eingepumpt und verlässt den Pass 3 wieder an einem Anschluss 6 des obersten Membranmodules 1. Die Zuund Abführung des Retentates an den Anschlüssen 5 und 6 der fünf Passe 3 erfolgt durch nicht gezeigte horizontal liegende Sammelleitungen.

Für die Abführung des Permeates von Anschlüssen 7 der Membranmodule 1 sind ebenfalls Sammelleitungen 8, Fig. 1b, vorgesehen. Ein Problem bei diesem bekannten System liegt darin, dass die U-Bögen 4 einerseits die vertikalen Abstände der Membranmodule 1 bestimmen, andererseits aber nur mit Toleranzen der Abstände ihrer Anschlüsse von mehreren mm rationell herstellbar sind. Deshalb passen die Abstände der Membranmodule 1 nicht zu den Abständen der Träger 2. Es ergibt sich ein hoher Fertigungsaufwand durch Richtarbeiten am Gestell der Träger 2.

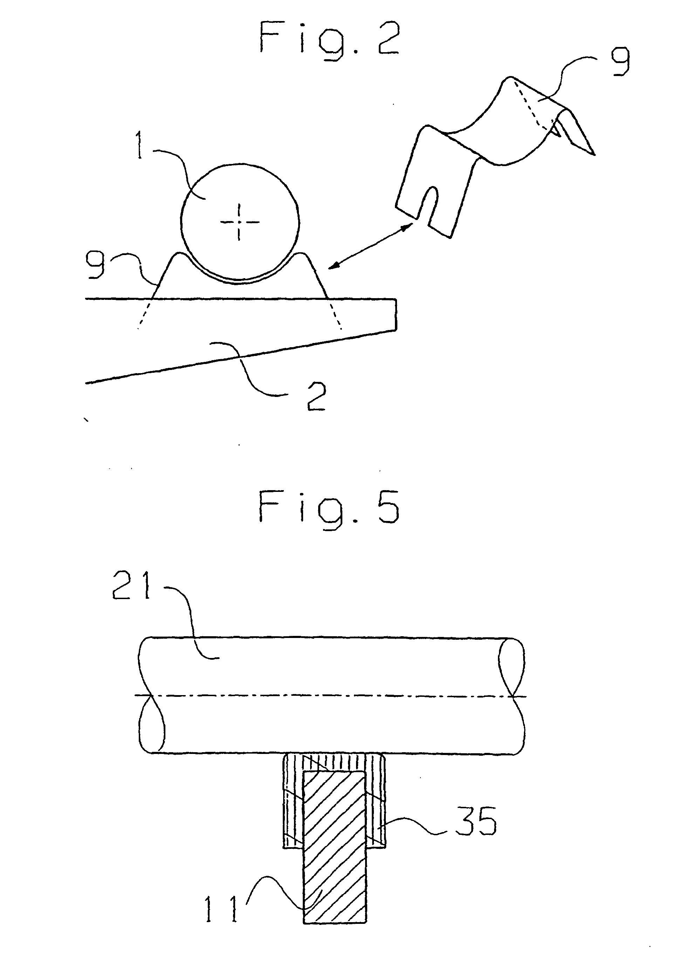

Eine bekannte Lösung dieses Anpassungsproblems veranschaulicht Fig. 2. Die Abstandstoleranzen zwischen den Membranmodulen 1 und den Trägern 2 werden durch eine Lagerung der Membranmodule 1 auf biegsamen Ausgleichsbügeln 9 ausgeglichen. Herstellung, Montage und Anpassung der Ausgleichsbügel 9 bringen wiederum einen hohen Arbeitsaufwand mit sich. Ausserdem ist dabei die Auflage der Membranmodule 1 nicht immer sicher. Für Module aus Kunststoff oder Keramik ergibt sich eine Bruchgefahr. Sind die Abstände der Träger 2 mit den Ausgleichsbügeln 9 nicht genügend genau angepasst oder sind die Achsen der Module 1 nicht hinreichend parallel, so können sich undichte Flanschverbindungen und Beschädigungen von deren Dichtungen ergeben. Dies umso mehr, als die Anzahl zu erstellender Flanschverbindungen meistens grösser als 160 ist.

Der vorstehend beschriebene Stand der Technik ist auch aus EP-A2-0 065 070 bekannt. Hier wird vorgeschlagen, daß die einzelnen Rohrmodule, die durch U-Bögen miteinander verbunden sind, nicht horizontal, sondern mit Gefälle verlegt sind. Die hintereinander geschalteten einzelnen Rohrmodule liegen senkrecht übereinander.

Aus GB-A1-1 465 971 ist eine Vorrichtung für die Umkehrosmose bekannt, bei der eine Vielzahl von Rohrmodulen zwischen quaderförmigen Kopfstücken angeordnet sind. Das Austauschen einzelner Rohrmodule, wie dies bei der Filtration von Produkten mit einem Feststoffanteil regelmäßig erforderlich ist, erscheint hier kaum möglich.

Der Erfindung liegt deshalb die Aufgabe zugrunde, die angeführten Probleme weitgehend zu beheben.

Gemäss der Erfindung wird die Lösung dieser Aufgabe bei einem System der eingangs genannten Art dadurch erreicht, dass die Membranmodule jeder Serie (Passe) in mindestens einer Ebene horizontal nebeneinander liegend angeordnet sind.

Das System ist mit Vorteil so ausgeführt, dass die horizontalen Ebenen mehrerer Serien (Passe) von Membranmodulen vertikal übereinander angeordnet sind und dass die Sammelleitungen zur Zu- und Abführung des Retentates der Serien (Passe) vertikal stehen.

Dabei kann sich das Merkmal ergeben, dass mindestens eine Serie (Pass) Membranmodule in zwei vertikal übereinander liegenden Ebenen angeordnet ist und dass die Verbindung von der unteren Ebene zur oberen Ebene zwischen zwei Membranmodulen durch einen schräg stehenden U-Bogen erfolgt.

Bei einer bevorzugten Ausführungsform weisen die Sammelleitungen zur Zu- und Abführung des Retentates Ablassvorrichtungen für angesammelte Feststoffe (Trüb) auf.

Weitere Varianten des Systems sind in den Patentansprüchen gekennzeichnet.

Das erfindungsgemässe System für die Membranfiltration bietet gegenüber bekannten Anordnungen mit vertikal angeordneten Serien von Membranmodulen den zusätzlichen Vorteil, dass man die Anzahl der Module in jeder Serie (Pass) vergrössern kann, ohne dass zusätzliche Trägerarme benötigt werden, sofern das einfache Traggestell schon hinreichend Reserveplätze für solche zusätzlichen Module aufweist.

Ausführungsbeispiele der Erfindung sind in der folgenden Beschreibung und den Figuren der Zeichnung näher erläutert. Es zeigen:
Fig. 1a und Fig. 1b ein bekanntes System für die Membranfiltration in Seitenansicht und in einem Teilschnitt,
Fig. 2 eine bekannte Lagerung von Membranmodulen auf biegsamen Ausgleichsbügeln,
Fig. 3 eine Frontansicht eines erfindungsgemässen Systems für die Membranfiltration mit horizontal nebeneinander angeordneten Membranmodulen.
Fig. 4 einen Teilschnitt durch das System gemäss Fig. 3 längs der Linie A-A,
Fig. 5 eine Lagerung eines Membranmodules auf einem Träger gemäss Fig. 4 im Detail,
Fig. 6 eine Frontansicht eines weiteren erfindungsgemässen Systems mit zwei, durch eine Sammelleitung verbundenen Gruppen von Serien (Passen) von Membranmodulen, und
Fig. 7a, 7b, 7c symbolische Ansichten von erfindungsgemässen Anordnungen von Membranmodulen für die Membranfiltracion.

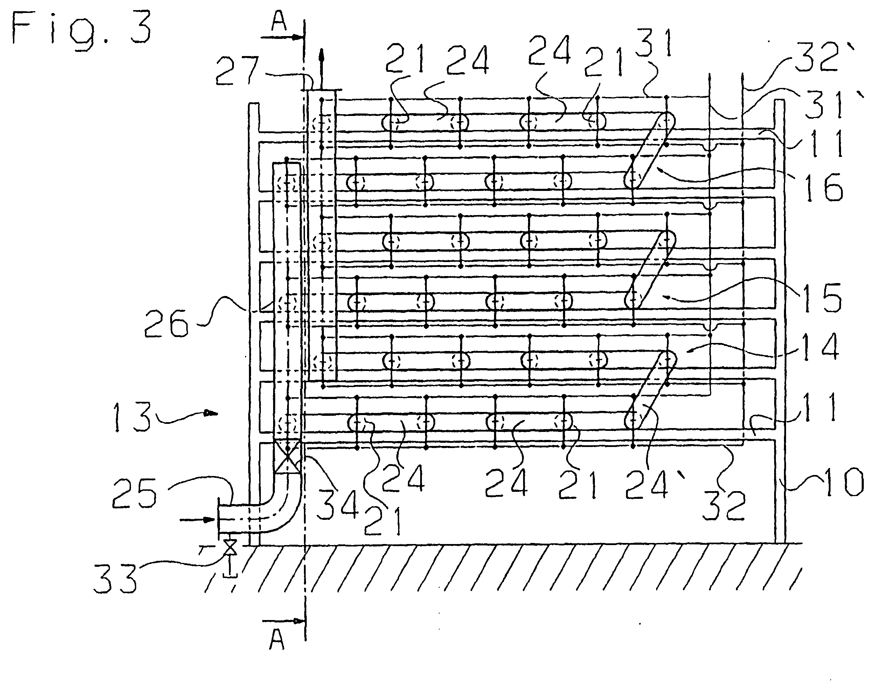

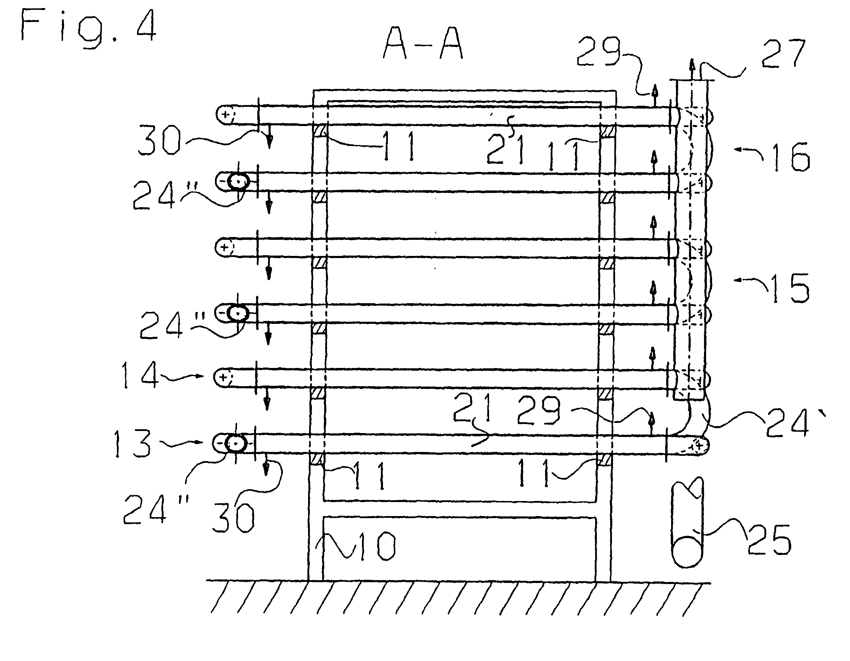

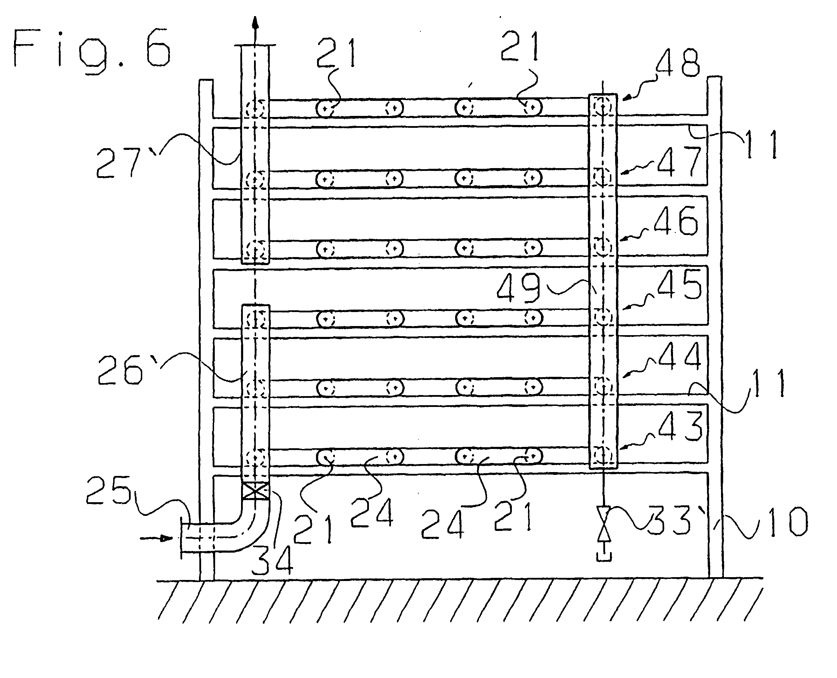

Fig. 3 und Fig. 4 zeigen eine Front- bzw. Seitenansicht im Teilschnitt A-A gemäss Fig. 3 eines erfindungsgemässen Systems. Ein Trägergestell 10 weist sechs Paare von Tragstangen 11 auf, welche parallel zueinander in sechs horizontalen Ebenen und vertikal übereinander angeordnet sind. Auf jedem Paar Tragstangen 11 liegt horizontal und quer eine Serie (Pass) 13, 14, 15, 16 von parallelen rohrförmigen Membranmodulen 21, ähnlich der Serie (Pass) 3, welche im bekannten System gemäss Fig. 1a vertikal steht. Fig. 5 zeigt eine Auflage eines Membranmoduls 21 auf einer Tragstange 11 im Detail. Im Gegensatz zur bekannten Auflage gemäss Fig. 2 mit dem in der Höhe verstellbaren Ausgleichsbügel 9 genügt gemäss Fig. 5 eine einfache elastische Zwischenlage 35 zwischen Membranmodul 21 und Tragstange 11.

Wie Fig. 3 zeigt, sind die Membranmodule 21 an ihren Enden durch U-Bögen 24 in Serien (Passe) 13, 14 verbunden. Die unterste Serie 13 ist mit der darüber liegenden Serie 14 durch einen schräg stehenden U-Bogen 24' verbunden, sodass sich eine Gesamtserie (Pass) ergibt, deren Teile 13, 14 in zwei vertikal übereinander liegenden Ebenen angeordnet sind. Die Ebenen der drei schräg stehenden U-Bögen 24' in den Passen 13, 14, 15 und 16 schliessen mit der Horizontalebene Winkel von 60 Grad ein. Bei besonders kompakter Bauweise können diese Winkel auch kleiner als 60 Grad sein.

Wie Fig. 3 und Fig. 4 erkennen lassen, umfasst das dargestellte System insgesamt drei derartige Gesamtserien (Passe) 13, 14, 15 und 16 mit je zwei Teilen. Das zu filtrierende Medium, vorzugsweise Fruchtsaft, gelangt über einen Anschluss 25 und eine vertikale Sammelleitung 26 in die jeweils daran angeschlossenen ersten Membranmodule 21 der unteren Teile 13 der Serien (Passen) 13, 14, 15, 16. Nach Durchlauf durch diese Passen gelangt das Medium als Retentat vom jeweils letzten Membranmodul 21 der oberen Teilserien 14 in eine daran angeschlossene vertikale Sammelleitung 27 zur Abführung des Retentates. Zur Sicherung einer gleichmässigen Verteilung von Feststoffen im Retentatstrom weist die Sammelleitung 26 an ihrem Eingang unten einen statischen Mischer 34 auf.

In dem Teilschnitt A-A von Fig. 4 stehen die vertikalen Sammelleitungen 26, 27 hintereinander. Damit in Fig. 4 die Sammelleitung 26 die unmittelbar dahinter stehende Sammelleitung 27 nicht verdeckt, ist hier nur deren Anschluss 25 dargestellt. Wie Fig. 3 zeigt, verläuft die Schnittebene A-A senkrecht zur Zeichenebene zwischen den Sammelleitungen 26, 27 und schneidet die ersten U-Bögen 24 der drei unteren Teile 13 der Serien vor deren Mitten. Die Schnitte mit diesen U-Bögen 24 sind in Fig. 4 mit 24'' bezeichnet.

Jedes an sich bekannte Membranmodul 21 weist zwei Verbindungsöffnungen zur Abführung des Permeates auf, welche in Fig. 4 durch die Pfeile 29, 30 symbolisiert sind. Die Verbindungsöffnungen 29, welche in der Darstellung der Fig. 3 an den Modulen 21 vorn liegen, sind Permeat-Sammelleitungen 31 zugeführt, die Verbindungsöffnungen 30, welche hinten liegen, speisen Permeat-Sammelleitungen 32. Die sechs Permeat-Sammelleitungen 31 führen in eine weitere Sammelleitung 31', die sechs Permeat-Sammelleitungen 32 in eine weitere Sammelleitung 32', welche beide das System verlassen.

Die beschriebene horizontale Lage der Membranmodule 21 bedingt ersichtlich eine mehr oder weniger vertikale Lage der Retentat-Sammelleitungen 26, 27. In derart orientierten Sammelleitungen können sich bei einer Unterbrechung der Retentat-Strömung Feststoffteile aus dem Retentat ungleichmässig ablagern, welche bei einem Wieder-Anfahren der Anlage einzelne Membranröhrchen in den Modulen 21 verstopfen. Dieser Nachteil wird gemäss Fig. 3 vermieden durch Ablassventile 33, wie sie am unteren Ende der Retentat-Sammelleitung 26 gezeigt sind. Versuche haben gezeigt, dass nach einer Unterbrechung der Retentat-Strömung durch ablassen oder auspumpen abgesetzter Feststoff-Teilchen ein Wieder-Anfahren ohne Störung möglich ist. So konnte ein bekanntes Vorurteil gegen eine horizontale Lage von Membranmodulen überwunden werden.

Bei einer Variante eines Systems für die Membranfiltration gemäss Fig. 6 tragen schon zu Fig. 3 beschriebene Bauelemente entsprechende Bezugszeichen. Auf den Paaren von Tragstangen 11 des Trägergestells 10 sind gemäss Fig. 6 sechs Serien (Passe) 43 bis 48 von Membranmodulen 21 horizontal gelagert. Dabei sind die Membranmodule 21 wie beim System gemäss Fig. 3 durch U-Bögen 24 in Serie verbunden. Von dem Retentat-Anschluss 25 her werden die Passe 43, 44, 45 über eine Zuführ-Sammelleitung 26' mit Retentat beaufschlagt. Nach seinem Durchlauf wird das Retentat durch eine weitere Sammelleitung 49 von den Passen 43-45 ab- und gleichzeitig den Passen 46-48 zugeführt. Schliesslich ist eine Sammelleitung 27' zur Abführung des Retentates von den Passen 46-48 vorgesehen. Sammelleitungen zur Abführung des Permeates entsprechen beim System gemäss Fig. 6 dem System gemäss Fig. 3, sind aber in Fig. 6 nicht mit dargestellt.

Die parallele Versorgung von Rohrleitungen mit feststoffhaltigen Flüssigkeiten, wie Fruchtsaft oder Abwässern in den Bereichen Chemie, Pharmazie, Lebensmittelverarbeitung, Abwasseraufbereitung usw. über Sammelleitungen 26, 27 gemäss Fig. 3 oder 26', 27', 49 gemäss Fig. 6 für das Retentat bietet bekanntlich gewisse Probleme bei der Sicherung gleicher An- und Abströmung aller angeschlossenen Parallel-Leitungen. Es hat sich aber gezeigt, dass bei den beschriebenen bevorzugten Ausführungsformen des Systems für die Membranfiltration durch Verwendung an sich bekannter und nicht mit dargestellter Leitelemente in den Sammelleitungen für das Retentat die genannten Strömungsprobleme vermieden werden können. Dies umso mehr, wenn man statische Mischer 34 gemäss Fig. 3 und 6 zur Homogenisierung der Verteilung von Feststoffen im Retentat einsetzt.

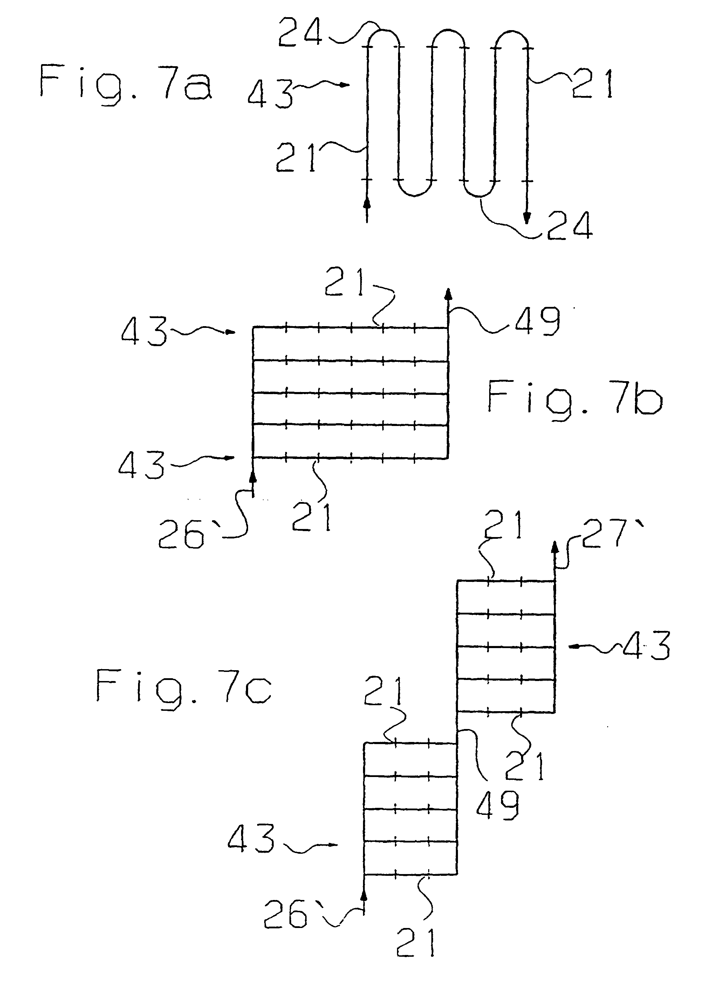

Die beschriebenen Ausführungsformen gemäss Fig. 3 bis 6 umfassen alle Serien (Passe) von Membranmodulen, welche horizontal nebeneinander liegen. Fig. 7a zeigt eine symbolische Ansicht von oben eines solchen Passes 43 mit sechs Membranmodulen 21, die durch fünf U-Bögen 24 verbunden sind. Eine symbolische Frontansicht von fünf derartigen Passen 43 zu je sieben Membranmodulen 21 zeigt Fig. 7b. Die horizontalen Ebenen der Passe 43 sind vertikal übereinander angeordnet und werden von zwei vertikalen Sammelleitungen 26', 49 für das Retentat versorgt. Fig. 7c zeigt eine symbolische Frontansicht eines Systems mit zehn Serien 43 von Membranmodulen 21, welche von drei vertikalen Sammelleitungen 26', 49, 27' versorgt werden. Ordnet man die fünf oberen Passe 43 senkrecht oberhalb der fünf unteren Passen 43 an, so erhält man das schon beschriebene System gemäss Fig. 6.

Für den Fachmann ergibt sich eine Vielzahl von Anordnungen des Systems für die Membranfiltration, welche alle den Rahmen der beigefügten Patentansprüche nicht verlassen.

## Patentansprüche

1. System für die Membranfiltration im Querstromverfahren mit einer Anzahl von Membranmodulen (21), jedes umfassend eine Membranröhre oder ein Bündel von mehreren Membranröhren, deren Wände die Funktion von Trennmembranen haben, sowie ein rohrförmiges Modulgehäuse zur Aufnahme der Membranröhren, zur Zu- und Abführung eines zu filtrierenden Mediums als Retentat und zur Abführung des Filtrates als Permeat, wobei jedes Membranmodul (21) je einen Verbindungsflansch zur Zu- und Abführung des Retentates, sowie mindestens eine weitere Verbindungsöffnung (29, 30) zur Abführung des Permeates aufweist, und wobei die Membranmodule (21) hintereinander liegend in Serien (13, 14, 15, 16; 43, 44, 45, 46, 47, 48) für den Durchlauf des Retentates durch U-Bögen (24) miteinander verbunden sind und die Serien (13, 14, 15, 16; 43, 44, 45, 46, 47, 48) an Sammelleitungen (26, 27; 26', 27'; 49) zur Zu- und Abführung des Retentates parallel angeschlossen sind, **dadurch gekennzeichnet, dass** die Membranmodule (21) jeder Serie (13, 14, 15, 16; 43, 44, 45, 46, 47, 48) in mindestens einer Ebene horizontal nebeneinander liegend angeordnet sind.

2. System nach Anspruch 1, **dadurch gekennzeichnet, dass** die horizontalen Ebenen mehrerer Serien (13, 14, 15, 16, 43 bis 48) von Membranmodulen (21) vertikal übereinander angeordnet sind und dass die Sammelleitungen (26, 27, 26', 27', 49) zur Zu- und Abführung des Retentates der Serien vertikal stehen.

3. System nach Anspruch 2, **dadurch gekennzeichnet, dass** mindestens eine Serie (13, 14) Membranmodule (21) in zwei vertikal übereinander liegenden Ebenen angeordnet ist und dass die Verbindung von der unteren Ebene zur oberen Ebene zwischen zwei Membranmodulen (21) durch einen schräg stehenden U-Bogen (24') erfolgt.

4. System nach Anspruch 3, **dadurch gekennzeichnet, dass** die Ebene des schräg stehenden U-Bogens (24') mit einer horizontalen Ebene einen Winkel von maximal 60 Grad einschliesst.

5. System nach Anspruch 2, **dadurch gekennzeichnet, dass** die in horizontalen Ebenen vertikal übereinander angeordneten Serien von Membranmodulen (21) mehrere Gruppen (43, 44, 45 und 46, 47, 48) von Serien bilden, bei welchen die vertikalen Sammelleitungen (49) zur Abführung des Retentates einer Gruppe (43, 44, 45) der Zuführung des Retentates für eine andere Gruppe (46, 47, 48) dienen.

6. System nach einem der Ansprüche 1-5, **dadurch gekennzeichnet, dass** die Sammelleitungen (26, 49) zur Zu- und Abführung des Retentates Ablassvorrichtungen (33, 33') für angesammelte Feststoffe aufweisen.

7. System nach einem der Ansprüche 1-5, **dadurch gekennzeichnet, dass** die Sammelleitungen zur Zu- und Abführung des Retentates Leitelemente zur Sicherung gleicher An- und Abströmung für alle an der betreffenden Sammelleitung angeschlossenen Serien aufweisen.

8. System nach einem der Ansprüche 1-5, **dadurch gekennzeichnet, dass** die Sammelleitungen (26, 26') zur Zu- und Abführung des Retentates statische Mischer (34) zur Sicherung einer gleichmässigen Verteilung von Feststoffen im Retentatstrom aufweisen.

9. System nach einem der Ansprüche 1-5, **gekennzeichnet durch** Trägermittel (11), auf welchen die Membranmodule (21) direkt aufliegen.

10. System nach einem der Ansprüche 1-5, **gekennzeichnet durch** Trägermittel (11), auf welchen die Membranmodule (21) über elastische zwischenlagen (35) aufliegen.

11. System nach einem der Ansprüche 1-5, **gekennzeichnet durch** Trägermittel (11) für die Membranmodule (21), welche freie Reserveplätze für weitere Serien von Membranmodulen aufweisen.

## Claims

1. Cross-flow membrane filtration system comprising a number of membrane modules (21) each including a membrane tube or a bundle of several membrane tubes, the walls of which serve as separating membranes, and a tubular module housing for receiving the membrane tubes, for the supply and discharge of a medium to be filtered as retentate and for the discharge of the fihrate as permeate, each membrane module (21) having a respective connecting flange for the supply and discharge of the retentate, and at least one further connecting opening (29, 30) for the discharge of the permeate, and the membrane modules (21) being connected in series (13, 14, 15, 16; 43, 44, 45, 46, 47, 48) by U-bends (24) for the passage of the retentate and the series (13, 14, 15, 16; 43, 44, 45, 46, 47, 48) being connected in parallel to collecting lines (26, 27; 26', 27'; 49) for the supply and discharge of the retentate, **characterised in that** the membrane modules (21) of each series (13, 14, 15, 16; 43, 44, 45, 46, 47, 48) are arranged horizontally alongside one another in at least one plane.

2. System according to claim 1, **characterised in that** the horizontal planes of several series (13, 14, 15, 16, 43 to 48) of membrane modules (21) are arranged vertically one above the other and that the collecting lines (26, 27, 26', 27', 49) for the supply and discharge of the retentate of the series are arranged vertically.

3. System according to claim 2, **characterised in that** at least one series (13, 14) of membrane modules (21) is arranged in two planes lying vertically one above the other and that the connection of the lower plane to the upper plane between two membrane modules (21) is produced by an inclined U-bend (24').

4. System according to claim 3, **characterised in that** the plane of the inclined U-bend (24') includes an angle of a maximum of 60 degrees with a horizontal plane.

5. System according to claim 2, **characterised in that** the series of membrane modules (21) arranged vertically one above the other in horizontal planes form several groups (43, 44, 45 and 46, 47, 48) of series, in which the vertical collecting lines (49) for the discharge of the retentate of one group (43, 44, 45) serve for the supply of the retentate for another group (46, 47, 48).

6. System according to one of claims 1-5, **characterised in that** the collecting lines (26, 49) for the supply and discharge of the retentate have discharge devices (33, 33') for accumulated solids.

7. System according to one of claims 1-5, **characterised in that** the collecting lines for the supply and discharge of the retentate have guide elements for ensuring equal inflow and outflow for all of the series connected to the relevant collecting line.

8. System according to one of claims 1-5, **characterised in that** the collecting lines (26, 26') for the supply and discharge of the retentate have static mixers (34) for ensuring a uniform distribution of solids in the retentate flow.

9. System according to one of claims 1-5, **characterised by** support means (11) on which the membrane modules (21) rest directly.

10. System according to one of claims 1-5, **characterised by** support means (11) on which the membrane modules (21) rest via flexible intermediate layers (35).

11. System according to one of claims 1-5, **characterised by** support means (11) for the membrane modules (21) having free reserve spaces for further series of membrane modules.

## Revendications

1. Système pour la filtration membranaire à courant transversal, comprenant un certain nombre de modules (21) à membranes dont chacun comporte une membrane tubulaire ou un faisceau de plusieurs membranes tubulaires dont les parois remplissent la fonction de membranes séparatrices, ainsi qu'un carter tubulaire de modules conçu pour recevoir les membranes tubulaires en vue de l'amenée et de l'évacuation d'un fluide devant être filtré, se présentant comme un rétentat, et de l'évacuation du filtrat se présentant comme un perméat ; système dans lequel chaque module (21) à membrane présente une aile respective de jonction en vue de l'amenée et de l'évacuation du rétentat, ainsi qu'au moins un orifice supplémentaire de jonction (29, 30) en vue de l'évacuation du perméat ; et dans lequel les modules (21) à membranes sont reliés les uns aux autres en succession à l'état couché, par l'intermédiaire de coudes en U (24), pour constituer des séries (13, 14, 15, 16 ; 43, 44, 45, 46, 47, 48) assurant le passage du rétentat, et lesdites séries (13, 14, 15, 16 ; 43, 44, 45, 46, 47, 48) sont raccordées, en parallèle, à des conduits collecteurs (26, 27 ; 26', 27' ; 49) destinés à l'amenée et à l'évacuation du rétentat, **caractérisé par le fait que** les modules (21) à membranes de chaque série (13, 14, 15, 16 ; 43, 44, 45, 46, 47, 48) sont agencés en juxtaposition horizontale à l'état couché, dans au moins un plan.

2. Système selon la revendication 1, **caractérisé par le fait que** les plans horizontaux de plusieurs séries (13, 14, 15, 16, 43 à 48) de modules (21) à membranes sont agencés en superposition verticale ; et **par le fait que** les conduits collecteurs (26, 27, 26', 27', 49), destinés à l'amenée et à l'évacuation du rétentat des séries, se dressent verticalement.

3. Système selon la revendication 2, **caractérisé par le fait qu'**au moins une série (13, 14) de modules (21) à membranes est agencée dans deux plans superposés verticalement ; et **par le fait que** la jonction entre le plan inférieur et le plan supérieur, entre deux modules (21) à membranes, est établie par un coude en U (24') disposé à l'oblique.

4. Système selon la revendication 3, **caractérisé par le fait que** le plan du coude en U (24') disposé à l'oblique décrit, avec un plan horizontal, un angle de 60 degrés au maximum.

5. Système selon la revendication 2, **caractérisé par le fait que** les séries de modules (21) à membranes, agencées en superposition verticale dans des plans horizontaux, forment plusieurs groupes (43, 44, 45 et 46, 47, 48) de séries dans lesquels les conduits collecteurs verticaux (49), destinés à l'évacuation du rétentat d'un groupe (43, 44, 45), servent à l'amenée du rétentat affecté à un autre groupe (46, 47, 48).

6. Système selon l'une des revendications 1-5, **caractérisé par le fait que** les conduits collecteurs (26, 49), conçus pour l'amenée et l'évacuation du rétentat, présentent des dispositifs de décharge (33, 33') destinés à des substances solides accumulées.

7. Système selon l'une des revendications 1-5, **caractérisé par le fait que** les conduits collecteurs, conçus pour l'amenée et l'évacuation du rétentat, présentent des éléments déflecteurs conçus pour assurer un flux d'arrivée et de sortie identique pour toutes les séries raccordées au conduit collecteur considéré.

8. Système selon l'une des revendications 1-5, **caractérisé par le fait que** les conduits collecteurs (26, 26'), conçus pour l'amenée et l'évacuation du rétentat, présentent des mélangeurs statiques (34) conçus pour assurer une répartition uniforme de substances solides dans le flux dudit rétentat.

9. Système selon l'une des revendications 1-5, **caractérisé par** des moyens de support (11) sur lesquels les modules (21) à membranes reposent directement.

10. Système selon l'une des revendications 1-5, **caractérisé par** des moyens de support (11) sur lesquels les modules (21) à membranes reposent par l'intermédiaire de couches intercalaires élastiques (35).

11. Système selon l'une des revendications 1-5, **caractérisé par** des moyens de support (11) affectés aux modules (21) à membranes et comportant des emplacements libres de réserve, destinés à d'autres séries de modules à membranes.
